# EUROPEAN PATENT APPLICATION

(11) **EP 0 587 952 A1**
(43) Date of publication of application: **23.03.1994**
(21) Application number: 92308538.5
(22) Date of filing: 18.09.1992
(51) Int. Cl.: G11B 20/12, G11B 15/00

(54) **Method for controlling a tape system storage device**

(71) Applicant: FUJITSU LIMITED, Kawasaki-shi, Kanagawa 211 (JP)
(72) Inventor: Ohmura, Yukinobu, c/o Fujitsu Limited, Kawasaki-shi, Kanagawa, 211 (JP)
(74) Representative: Rackham, Stephen Neil

(57) **Abstract**

A method for controlling the input to or output from block units (17a, 17b) of a tape system storage device (15) comprises the steps of: recording retrieval information (18) concerning a starting block position of each file (17a, 17b) on a tape at a final portion of data stored on the tape (16); and fetching the retrieval information (18) when the tape is mounted. When a file (17a, 17b) is to be accessed, the tape (16) is moved to the beginning position of that file (17a, 17b), based on a current head position and the block position data for the beginning of that file that is obtained from the fetched retrieval information (18).

## Description

The present invention relates to a method for controlling a tape system storage device which can more efficiently access the tape system storage device such as a magnetic tape or a cartridge magnetic tape used as a sequential file storage medium.

In general, a tape storage device is used to sequentially store files starting from the beginning of a tape. In a prior art tape storage device, when searching for a file stored on a tape, it is necessary to search from the beginning of the tape to a block in which the target file data is stored. If there is a method for directly pointing to the beginning of a required file, a read time therefore can be shortened.

The file format of a prior art cartridge magnetic tape stores data in units of 512-byte blocks. BOT denotes a beginning-of-tape marker or BOT marker, BL1 to BL7 denote blocks in which the contents of a file are stored and FM denotes a file marker showing the end of a file. When it is determined that a file is the last file on the tape, two file markers FMFM are recorded successively at the end of the file.

When searching for a file in a prior art tape system using such a tape format, the search is started from the position of a beginning-of-tape marker BOT, a next block of the file marker FM is regarded as the beginning of a file and the search for a file is carried out. If a file found is not the target file, a next file is searched for in the same way and the search is repeated until the target file is found or two successive FM file markers are found.

Therefore, in the conventional method, it is necessary to re-wind the tape in order to locate a required file, and after a head position has been returned to the beginning of the tape, a file retrieval operation from the tape is effected.

The present invention aims to solve the above problems.

In accordance with the present invention, there is provided a method for controlling a tape system storage device that inputs/outputs to or from the tape system storage device by block units comprising the steps of: recording retrieval information concerning a starting block position of each file on a tape at a position after date is stored on the tape; fetching said retrieval information when the tape is mounted; wherein, when a file is accessed, the tape is moved back to the beginning position of the file, based on a current head position and the block position data for the beginning of the file that can be obtained from the fetched retrieval information.

The present invention provides a method for controlling a tape system storage device in which a current head position on the tape and a beginning position of a required file are recognized, so that the head can be located to the beginning position of the required file in the shortest possible time.

A particular embodiment of a method in accordance with this invention will now be described and contrasted with the prior art with reference to the accompanying drawings, in which:-
Figure 1 is a view showing a file configuration of a tape in a prior art cartridge magnetic type system;
Fig. 2 is a view showing the operational principle of the present invention;
Fig. 3 is a view showing the configuration of files on a tape of an embodiment in accordance with the present invention;
Fig. 4 is a view showing the data structure of retrieval information;
Fig. 5 is a flow chart showing the operation in a starting state of a tape transport in an embodiment of the present invention;
Fig. 6 is a flow chart showing the operation of a tape system when reading from tape in an embodiment in accordance with the present invention;
Fig. 7 is a flow chart showing the operation of a tape system when writing to tape in an embodiment in accordance with the present invention; and
Fig. 8 is a flow chart showing the operation of the tape system of the present invention during a close operation of a file.

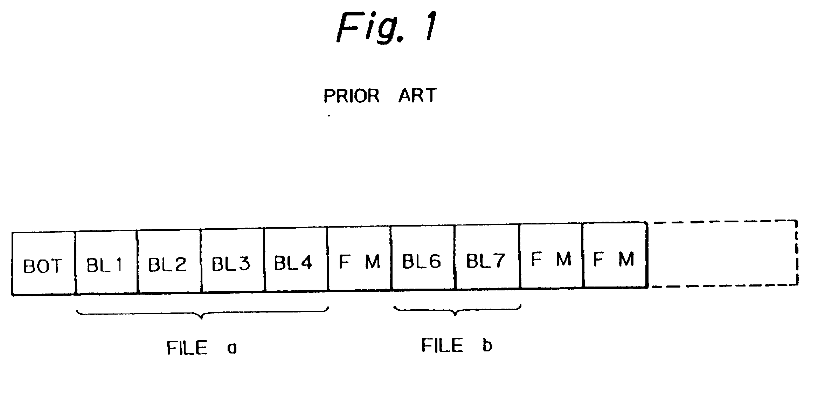

Figure 1 is a view showing a file configuration of a tape in a prior art cartridge magnetic tape system. For example, as shown in Fig. 1, the format of the file in a conventional cartridge magnetic tape device is formed by storing data in block units of 512 bytes. In Fig. 1, BOT denotes a beginning-of-tape marker or BOT marker, BL1 to BL7 denote blocks in which the contents of the file are stored, and FM denotes a file marker showing the end of a file. When it is determined that a file is the last file on a moving tape, two file markers FM are recorded in succession at the end of the file.

When accessing a tape using this format, a prior art search operation is started from the position of a beginning-of-tape marker BOT, a block following the file marker FM is recognized as the beginning of a file. If the found file is not the intended file, the next file is searched for in the same way and the succeeding search is repeated until the target file is found, or the two successive file marker FM are found.

Therefore, according to a conventional method, it is necessary to rewind the tape once in order to locate the desired file by using the file retrieval system.

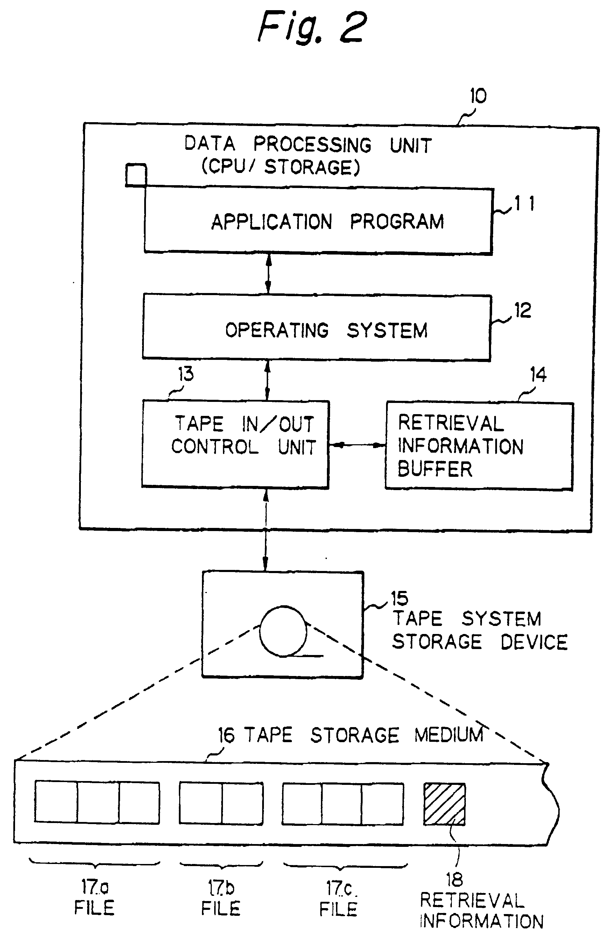

Figure 2 is a view showing the operational principle of the present invention. In Fig. 2, reference numeral 10 denotes a data processing unit formed by a central processor unit (CPU) and a storage memory or the like, 11 an application program for effecting data processing of a file that is stored on a tape storage medium, 12 an operating system for providing an overall system functions with regard to the application program 11, 13 a tape input/output control unit for controlling an input/output to a tape storage medium, 14 a retrieval information buffer that stores the retrieval information, 15 a tape system storage device such as a magnetic tape device or a cartridge magnetic tape (CRMT) device or the like, 16 a tape storage medium, 17a to 17c denote files, and 18 denotes retrieval information containing starting block position information for each file.

The tape input/output control unit 13 records retrieval information 18 concerning a starting block position for each file on a tape, after the last file on the medium stored on the tape storage medium 16.

When the tape is mounted, the retrieval information 18 is fetched into the retrieval information buffer 14. When an accessing files 17a to 17c, a head movement to the beginning position of the target file is carried out from the current head position and the beginning block position information of the file that is obtained from the retrieval information 18 is fetched into the retrieval information buffer 14. When tape motion is started, a head position of the tape storage device 15 is determined, and when writing of the file on the tape is effected based on a request from the application program 11, each file name and the head position are stored in the retrieval information buffer 14. When all the processing with regard to the tape storage medium 16 has been finished, all starting block position information of files 17a to 17c modified by the current operation is written on the tape storage medium 16 from the retrieval information buffer 14, as retrieval information 18. If it is necessary to remove a tape, the tape does not need to be rewound to be removed.

Thereafter, when the tape storage medium is accessed, the head is returned to a single previous file at a time of tape mounting and after the position information has been read, it is stored in the retrieval information buffer 14. If the required information in the retrieval information buffer 14 is acknowledged to be the retrieval information 18 for the target file, the current head position and the head position of the target file are calculated and the number of blocks corresponding to that difference are skipped over to locate the target file.

In accordance with the present invention, the retrieval information 18 is recorded at the end of the tape storage medium 16 and a starting block position of each file 17a to 17c (viz., number of stored blocks) is read-in thereat. Since the tape system has two file skip functions, first, an FM signal is detected in a short time, and second, any required block after several blocks is detected.

In an open time of the tape system, the information is read to fetch the stored number of blocks of a required file from the retrieval information 18. Then, comparing the number of blocks currently being pointed to with the fetched of blocks, the tape is transported by an amount equal to the difference. In this way, when a next file is to be located, it is possible to transport the tape from the current position to the target position with a minimum amount of movement.

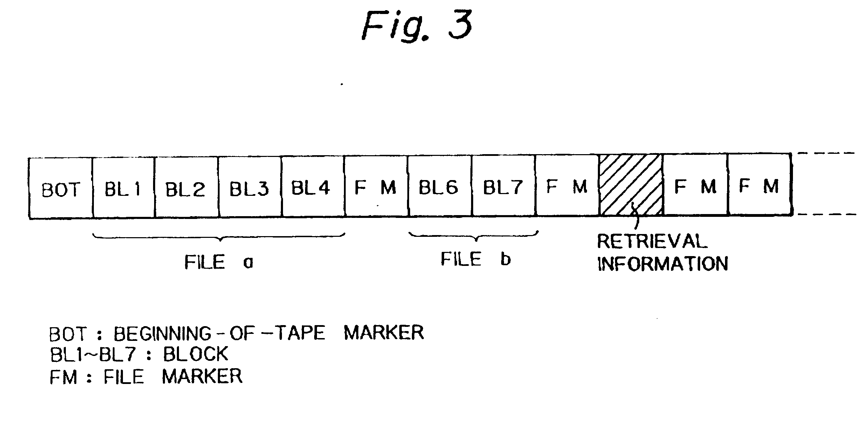

Fig. 3 is a view showing the configuration of files on a tape of an embodiment in accordance with the present invention.

As described above, data is stored on a tape in blocks of 512 bytes and files are recorded sequentially by block units. In Fig. 3, BOT denotes a start marker of a tape, BL1 to BL7 each denote blocks in which the contents of a file are stored, BL1 to BL4 form a file a and BL6 to BL7 forms a file b. FM denotes a file marker that shows the end of the file.

In an example of Fig. 3, file a is formed by four blocks and file b is formed by two blocks. In the present embodiment, retrieval information 18 is stored after the last file b.

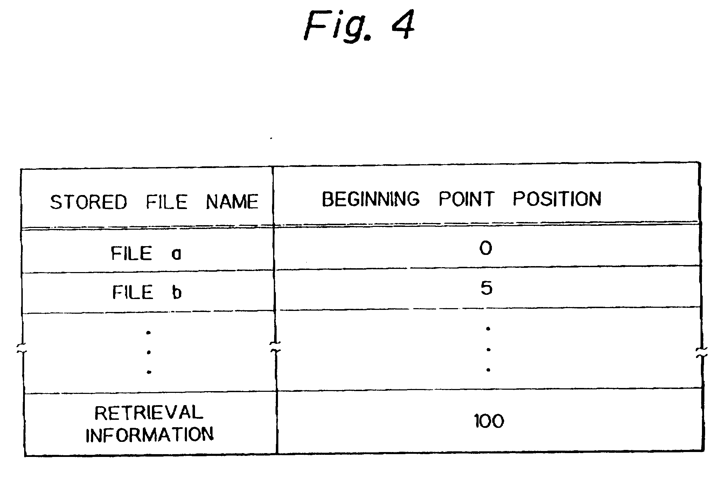

Fig. 4 is a view showing the data structure of the retrieval information 18. In Fig. 4, the data structure has corresponding information between a stored file name of each file and a beginning point position in which the file is stored. Regarding the retrieval information 18, the information of the position of a beginning point is fetched. An identifier of retrieval information or size information of the retrieval information 18 may be stored therein as a part of the retrieval information 18.

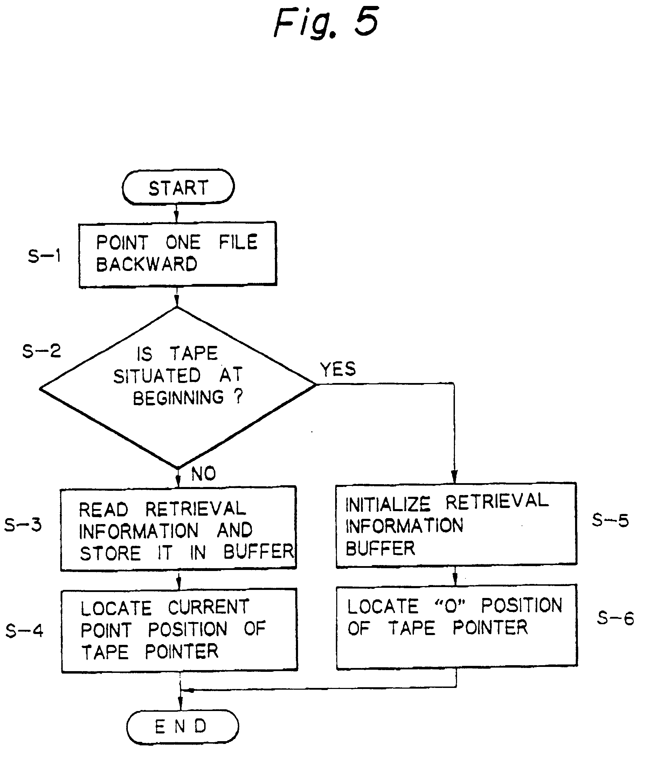

Fig. 5 is a flow chart showing operation in a starting state of a tape transport in an embodiment of the present invention.

Step 1 In Fig. 2, when the power supply is turned ON to the tape storage unit 15, or when a tape is mounted, first of all, the tape is skipped back by an amount of one file.

Step 2 Then, if the tape is positioned at the beginning of the tape, the process proceeds to Step 5, otherwise, it proceeds to Step 3.

Step 3 If the tape is not positioned at the beginning of the tape, the tape is read from that position and the content is stored in retrieval information buffer 14 in the storage unit. This stored information is the retrieval information 18, but if it is not the retrieval information 18, the tape is rewound to the BOT and the same tape control method as used in the prior art is carried out.

Step 4 Since the retrieval information 18 read from the retrieval information buffer 14 includes the position data of a beginning point on the tape where the retrieval information 18 is stored, the current position information is obtained from that information. Then, a tape pointer used in the case of a skip-over control of a block when being accessed, is stored as current point position information and the process terminates.

Step 5 If the tape is positioned at the beginning of the tape, it is determined whether it is a new tape or a tape created by a conventional method. Then, the retrieval information buffer 14 is initialized to a state of "No retrieval information".

Step 6 The tape pointer is returned to "0" and the process terminates.

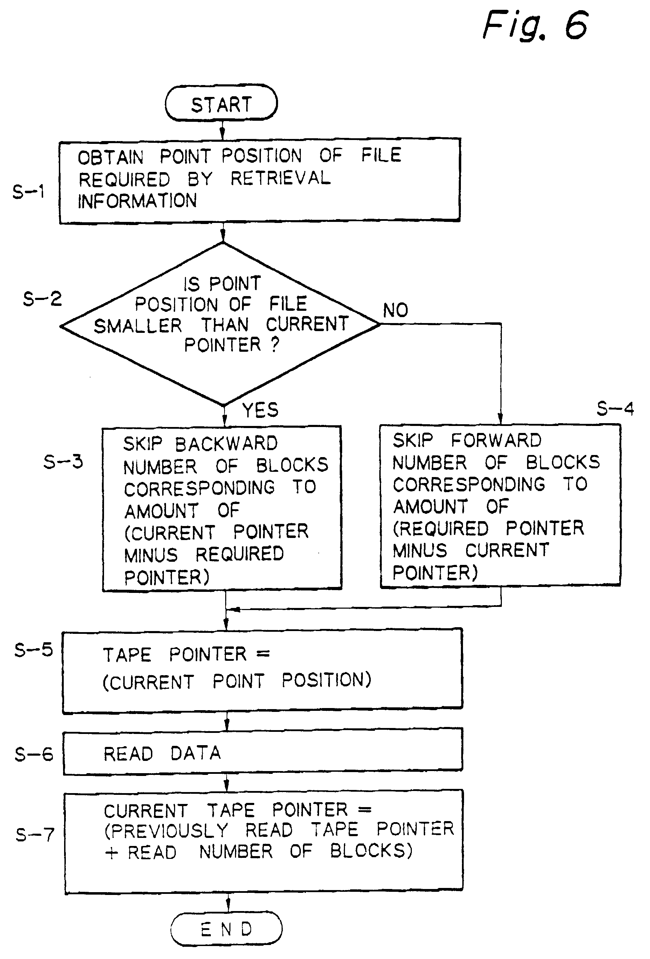

Figure 6 is a flow chart showing the operation of a tape system when reading from tape in an embodiment in accordance with the present invention.

Step 1 In a processing of a beginning time as shown in Fig. 5, since a current position of the tape and retrieval information 18 have been prepared, in light of the retrieval information 18 in a retrieval information buffer 14 from a file name that the read requested, a beginning point position of the file is obtained.

Step 2 The obtained beginning point position is compared with a current position of the tape, and, if the former is larger than the latter, the process proceeds to Step 4. If the former is smaller than the latter, the process proceeds to Step 3.

Step 3 The block number obtained by a beginning point position of the requested file being subtracted from a current position, is skipped over a forward retrieval direction, and then the process proceeds to Step 5.

Step 4 The block number obtained by a current position being subtracted from a beginning point position of the requested file, is skipped backward.

Step 5 By the process of Step 3 or Step 4, the head is positioned in a beginning block of a required file. At that position, a tape pointer is regarded as indicating a current pointer position.

Step 6 Data is read out starting from the position of the tape pointer.

Step 7 When data is read, the number of blocks corresponding to the amount of reading that is effected is stored in advance. After data has been read, the number of blocks corresponding to the amount of data read is added to the tape pointer.

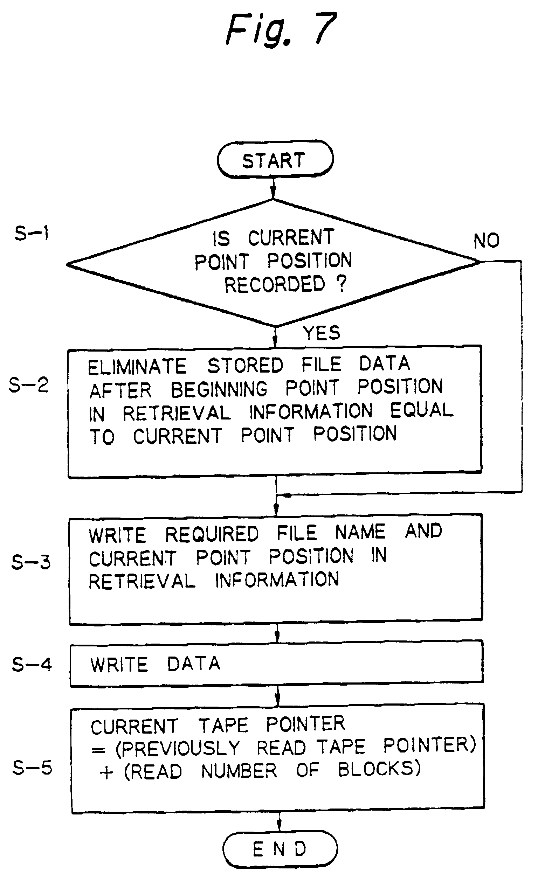

Fig. 7 is a flow chart showing the operation of a tape system when writing to a tape in an embodiment in accordance with the present invention.

Step 1 When writing to tape, in the same manner as when reading from tape, since a current tape position and the retrieval information 18 are prepared in advance, the current point position is compared with each beginning point position contained in the retrieval information 18, to determine whether or not the current point position is recorded in the retrieval information 18. If a new tape is used, since there is no beginning point position information, the following Step 2 is skipped and the process proceeds to Step 3.

Step 2 If a current point position where a write operation will start is present in the beginning point position information within the retrieval information 18, since new data will be written from that position onward, all the file information within the retrieval information 18 from the current point position onward is eliminated. This is because, in the tape system storage device 15, the content of the data from the block where data begins to be written becomes invalid. The present embodiment assumes that no data will be written starting from within an existing file.

Step 3 A specified file name and a current point position at which data will start to be written, are written at a final position of the retrieval information 18 in the retrieval information buffer 14.

Step 4 The specified data is written.

Step 5 After data is written, the number of blocks corresponding to the write operation is added to a tape pointer, a current position after the write operation is pointed to, and the process terminates.

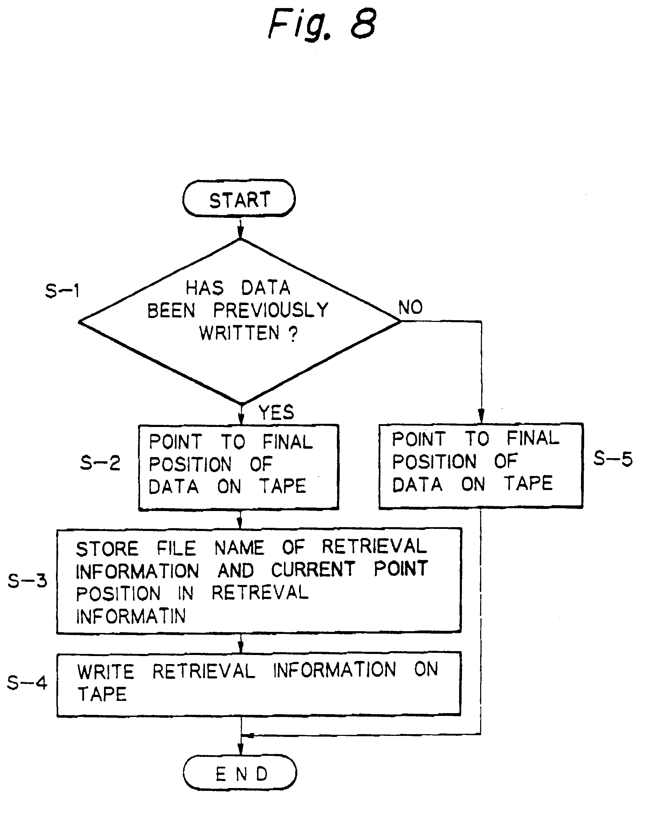

Figure 8 is a flow chart showing the operation of the tape system of the present invention during a close operation.

Step 1 From the time a file is opened until it is closed, it is judged whether or not data is written, that is, whether or not the retrieval information 18 is rewritten. If no data is written, the process proceeds to Step 5.

Step 2 When data has been written, the current block position on tape is appended to the final data position.

Step 3 A file name of the retrieval information 18 itself and a current block position are recorded at the end of the retrieval information 18 in the retrieval information buffer 14.

Step 4 The content of the retrieval information buffer 14 is written at the end of the final data on the tape, and the process terminates.

Step 5 When data has not been written, the final position of data on the tape is pointed to and the process terminates.

In an embodiment of the present invention, after the tape operation has ended, the tape is not usually rewound. When it is not necessary to change the tape storage medium, the power supply may be turned OFF with the tape still mounted in the tape drive unit.

From the above, in accordance with the present invention, when accessing an arbitrary file on a tape storage medium, it is not necessary for the tape system to search from the beginning of a tape. Therefore, since the tape system can access a file with the least amount of head movement from the current position, so that the time required to search for a file can be remarkably shortened.

## Claims

1. A method for controlling a tape system storage device that inputs/outputs to or from the tape system storage device by block units comprising the steps of:
recording retrieval information concerning a starting block position of each file on a tape at a position after date is stored on the tape;
fetching said retrieval information when the tape is mounted; wherein, when a file is accessed, said tape is moved back to the beginning position of the file, based on a current head position and the block position data for the beginning of said file that can be obtained from the fetched retrieval information.

2. A method according to claim 1, wherein said method, in a starting state of the tape transport, comprises the steps of:
winding the tape forward by an amount of one file, when a power supply to the tape system storage device is turned ON;
initializing a retrieval information buffer, if the tape is positioned at the beginning of the tape;
reading, if the tape position is not at the beginning of the tape, the tape content from the instant position and storing the content in the retrieval information buffer in the storage device;
obtaining a current position from data of a beginning point position and storing an accessed tape pointer as a current point position;
initializing the retrieval information buffer to a state wherein it contains no retrieval information; and
setting the tape pointer to an "0" state.

3. A method according to claim 2, wherein said method comprises a step of winding the tape forward by an amount of one file, when a tape is mounted.

4. A method according to claim 2 or 3, wherein if the content of a tape is not the information to be retrieved, the tape is re-wound.

5. A method according to any one of the preceding claims, wherein said method, in the operation of reading from a tape, comprises the steps of:
obtaining a beginning point position of a target file from the retrieval information;
comparing the obtained beginning point position with a current position of the tape and ascertaining whether the former is smaller than the latter;
when the obtained beginning point position is smaller than the current position of the tape subtracting a beginning point position of the target file from the current position and skipping over a number of blocks in a reverse direction corresponding to an amount of the difference; and when the obtained beginning point position is greater than the current position of the tape subtracting the current position from a beginning point position of the target file and skipping over a number of blocks in a forward direction corresponding to an amount of the difference;
regarding a tape pointer as a current point position after positioning a head to a beginning block of the target file;
reading data from the position of the tape pointer to store a block number corresponding to a read amount; and
adding the number of blocks corresponding to the previously read amount to the tape pointer.

6. A method according to any one of the preceding claims, wherein said method, in the operation of writing to a tape, comprises the steps of:
comparing a current point position with each beginning point position in the retrieval information to check whether a current point position is recorded in the retrieval information;
eliminating stored file information from the beginning point position in succession within the retrieval information that is equal to the current point position;
writing in the retrieval information both a specified file name and a current point position;
writing the desired data therein; and
adding a number of blocks corresponding to the amount of data written in the write operation, to a tape pointer and pointing to a current position after the write operation.
